# EUROPÄISCHE PATENTSCHRIFT

(11) **EP 0 946 999 B1**
(45) Veröffentlichungstag und Bekanntmachung des Hinweises auf die Patenterteilung: **23.07.2003**
(21) Anmeldenummer: 97948682.6
(22) Anmeldetag: 29.10.1997
(51) Int. Cl.: H01L 41/04

(54) **VERFAHREN UND VORRICHTUNG ZUM ANSTEUERN EINES KAPAZITIVEN STELLGLIEDES**
METHOD AND DEVICE FOR ACTIVATING A CAPACITIVE ACTUATOR
PROCEDE ET DISPOSITIF D'ACTIVATION D'UN ACTIONNEUR CAPACITIF

(30) Priorität: 18.12.1996 DE 19652807
(43) Veröffentlichungstag der Anmeldung: 06.10.1999
(73) Patentinhaber: SIEMENS AKTIENGESELLSCHAFT, 80333 München (DE)
(72) Erfinder: HOFFMANN, Christian, D-93057 Regensburg (DE); LARISCH, Benno, D-92421 Schwandorf (DE)
(86) Internationale Anmeldenummer: DE9702509
(87) Internationale Veröffentlichungsnummer: WO98027600

(56) Entgegenhaltungen:
- US-A- 5 543 679
- PATENT ABSTRACTS OF JAPAN vol. 018, no. 447 (E-1594), 19.August 1994 & JP 06 140682 A (TOYOTA MOTOR CORP), 20.Mai 1994,

## Beschreibung

Verfahren und Vorrichtung zum Ansteuern eines kapazitiven Stellgliedes

Die Erfindung betrifft ein Verfahren und eine Vorrichtung zum Ansteuern eines kapazitiven Stellgliedes, insbesondere eines piezoelektrisch betriebenen Kraftstoffeinspritzventils einer Brennkraftmaschine.

Piezo-Stellglieder bestehen aus einer Vielzahl piezokeramischer Schichten und bilden einen sog. "Stack", der bei Anlegen einer Spannung seine Abmessungen, insbesondere seine Länge s um einen Hub ds verändert, oder bei mechanischem Druck oder Zug eine elektrische Spannung erzeugt.

Die elektrischen Eigenschaften eines derartigen Piezostacks ändern sich mit der Temperatur, der er ausgesetzt ist. Mit steigender Temperatur vergrößert sich seine Kapazität, aber auch der Hub nimmt zu. Bei den für automotive Anwendungen zu berücksichtigenden Temperaturen von etwa -40°C bis +140°C sind dabei Änderungen bis zu einem Faktor 2 zu beobachten.

In der älteren deutschen Patentanmeldung 19644521.3 wurde bereits vorgeschlagen, ein kapazitives Stellglied mit konstanter Energie anzusteuern, da eine Aufladung mit konstanter Energie über den benötigten Temperaturbereich einen wesentlich konstanteren Hub erbringt.

Der Hub ändert sich etwa linear mit der angelegten Spannung bei einer bestimmten Stellgliedkapazität bzw. einer bestimmten Temperatur. Ändert sich die Temperatur, so ändert sich auch der Hub bei gleichbleibender Spannung. Hingegen ändert sich der Hub proportional zum Quadrat der aufgebrachten Energie (ds ∼ e²), aber unabhängig von der Temperatur.

Einem Stellglied eine bestimmte Energiemenge zuzuführen, ist sehr aufwendig. Beim Gegenstand der älteren deutschen Patentanmeldung 19644521.3 müssen Strom und Spannung gemessen, das Produkt daraus aufintegriert, und der Ladevorgang abgebrochen werden, wenn der Integralwert einen vorgegebenen Wert e = ∫u-idt erreicht. Eine Vereinfachung ergibt sich, wenn das Stellglied mit einem Konstantstrom geladen wird. Dann erübrigt sich eine Multiplikation.

Aus der Patentschrift US 5,543,679 ist eine Vorrichtung zum Ansteuern eines piezoelektrisch betriebenen Kraftstoffeinspritzventils einer Brennkraftmaschine bekannt, in der zwischen Kondensator und piezoelektrischen Element ein Transformator zur temperaturgeregelten Energieübertragung zum Einsatz kommt. Eine Korrektur der Ladezeit oder Ladespannung eines Ansteuervorgangs in Abhängigkeit von dem vorherigen Ansteuervorgang findet hier nicht statt.

Aus dem Japanischen Patent Abstract JP-A-06 140682 ist eine Ansteuervorrichtung für ein piezoelektrisch betriebenes Kraftstoffeinspritzventil einer Brennkraftmaschine bekannt, das über eine Spannungsmessung am Kondensator vor und nach dem Ladevorgang die auf das piezoelektrische Element übertragene Ladung und die Temperatur des piezoelektrischen Elements ermittelt und abhängig davon die Energie für die Aufladung des Kondensators korrigiert.

Es ist Aufgabe der Erfindung, ein Verfahren zum Laden eines kapazitiven Stellgliedes mit einem vorgegebenen Energiebetrag anzugeben, welches wesentlich einfacher durchzuführen ist.

Diese Aufgabe wird erfindungsgemäß durch die Merkmale der Patentansprüche 1, 2 und 5 gelöst.

Ein Ausführungsbeispiel nach der Erfindung ist im folgenden unter Bezugnahme auf die schematische Zeichnung näher erläutert. Es zeigen:
- Figur 1: ein Kennfeld KF für die Ladezeit t und die damit erreichbare Stellgliedspannung Up,
- Figur 2: ein Schaltbild einer Stellglied-Ansteuerschaltung, und
- Figur 3: ein Flußdiagramm für die Arbeitsweise der Schaltung nach Figur 2.

Die Erfindung geht von der Überlegung aus, daß es sich bei den Veränderungen der Stellgliedkapazität um temperaturbedingte Veränderungen handelt, die eine gegenüber dem zeitlichen Abstand aufeinanderfolgender Stellgliedbetätigungen bei einer Brennkraftmaschine sehr große Zeitkonstante aufweisen. Es ist deshalb nicht erforderlich, die Regelung der Aufladung im Regelzyklus (Ansteuervorgang) selbst durchzuführen. Es genügt vollkommen, eine Regelabweichung in einem Ansteuervorgang festzustellen und diese Regelabweichung im darauffolgenden Ansteuervorgang zu korrigieren.

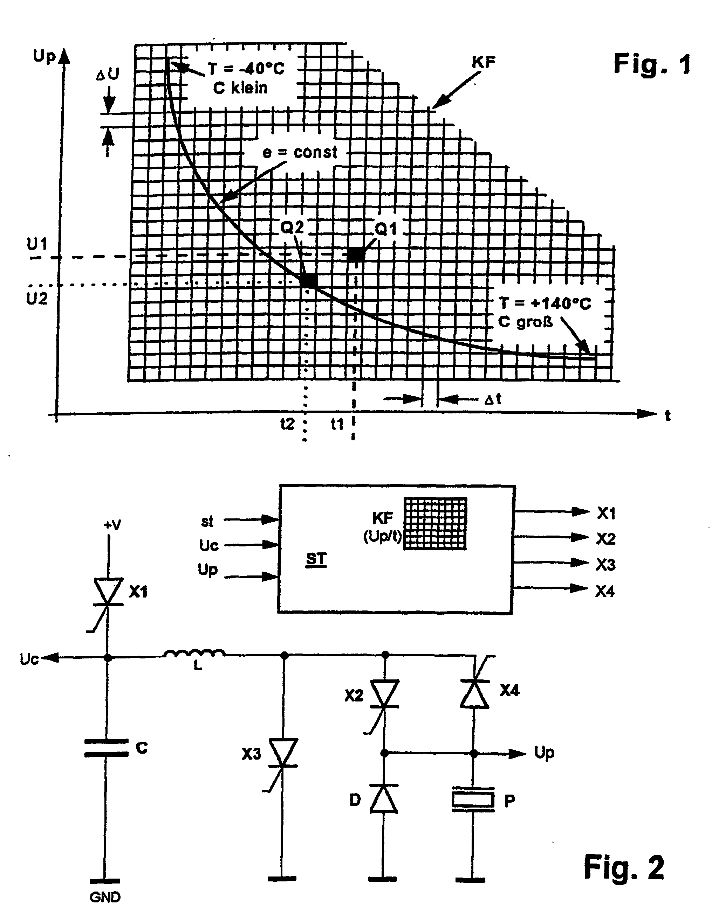

Unter Zugrundelegung einer in Figur 2 dargestellten Schaltung wird das Stellglied P aus einem auf eine vorgegebene Spannung Uc aufgeladenen Kondensator C über eine Umschwingspule L, die zusammen mit dem Stellglied P einen Schwingkreis bilden, während einer für einen ersten Ansteuervorgang vorgegebenen Ladezeit t = t1 aufgeladen. Je nach der von der momentanen Stellglied-Temperatur T abhängigen Kapazität des Stellgliedes P, der einzigen, abhängig von der Temperatur T wesentlich veränderbaren Unbekannten im Schwingkreis, wird dabei eine bestimmte Ladespannung Up = U1 am Stellglied P erreicht.

Figur 1 zeigt ein Kennfeld, auf dessen Abszisse die Zeit t in Schritten Δt für die Ladezeit t und auf dessen Ordinate die in dieser Zeit erreichte Stellgliedspannung Up in Schritten ΔU aufgetragen sind. In von Figur 1 abweichenden realen Kennfeldern mit wesentlich kleineren Kennfeldbereichen ist beispielsweise Δt = 1µs und ΔU = 0,5V. In diesem Kennfeld ist zum besseren Verständnis eine experimentell ermittelte Kurve e konstanter Energie eingezeichnet und gespeichert, die sich bei der Schaltung nach Figur 2 ergibt, wenn das Stellglied P seinen Temperaturbereich durchfährt und dabei seine Kapazität ändert (links oben: kleine Kapazität bei niedriger Temperatur; rechts unten: große Kapazität bei hoher Temperatur). Wird dem Stellglied P diese Energie zugeführt (was der Fall ist, wenn der Schnittpunkt von t und Up auf der Kurve e liegt), so erreicht man einen konstanten Stellgliedhub über den gesamten Temperaturbereich.

Der der vorgegebenen Ladezeit t1 und der damit erreichten Ladespannung U1 zugeordnete Kennfeldbereich Q1 liegt oberhalb der Kurve e = const. Das bedeutet, daß dem Stellglied P ein zu großer Energiebetrag zugeführt wurde. Liegt der Kennfeldbereich unterhalb der Kurve, wurde dem Stellglied ein zu kleiner Energiebetrag zugeführt.

Es gibt verschiedene Verfahren, um in einem Kennfeld von einem Punkt aus eine Kurve zu erreichen. Der kürzeste Weg führt von dem Punkt auf einer Normalen zur Kurve durch den Punkt. Die einfachste Methode ist eine inkrementelle Annäherung in gleichen Schritten, die nachstehend beschrieben wird. Die Schrittweite kann auch, je nach Entfernung von der Kurve, unterschiedlich groß sein, so daß eine schnelle Annäherung an die Kurve bei großem Abstand erreichbar ist.

Bei dem Ausführungsbeispiel mit gleich großen inkrementellen Schritten ist in allen Bereichen oberhalb der Kurve e, welche von der Kurve nicht berührt werden, eine negative Zahl "-1" eingeschrieben, in allen Bereichen unterhalb der Kurve e eine positive Zahl "+1", und in allen Bereichen, welche von der Kurve berührt werden, eine "0". "+1" bedeutet, daß die nächste Ladezeit um Δt vergrößert werden muß. "-1" bedeutet, daß die nächste Ladezeit um Δt verkleinert werden muß. "0" bedeutet, daß die Ladezeit unverändert bleibt. Es kann auch in Bereichen mit geringem Abstand zu der Kurve e eine "0" eingeschrieben werden, damit die Regelung nicht zu "nervös" arbeitet.

Ausgehend vom Bereich Q1(t1, U1), der bei dem ersten Ansteuervorgang erreicht wird, wird in diesem Ausführungsbeispiel nach zwei oder drei inkrementellen Schritten die Ladezeit t2 bestimmt, in welcher am Stellglied P eine Ladespannung U2, und damit Bereich Q2, durch den die Kurve e verläuft, erreicht wird. Bei folgenden Ansteuervorgängen werden nur bei temperaturbedingten Kapazitätsänderungen andere Ladezeiten t eingestellt, wobei dann im wesentlichen Bereiche entlang der Kurve e angesteuert werden.

Figur 2 zeigt eine Prinzipschaltung zum Ansteuern eines einzelnen, weiter nicht dargestellten Kraftstoffeinspritzventils einer Brennkraftmaschine über ein piezoelektrisches Stellglied P, mittels einer üblicherweise mikroprozessorgesteuerten Steuerschaltung ST.

Zwischen dem Pluspol +V und dem Minuspol GND einer Energiequelle liegt eine Reihenschaltung eines gesteuerten, elektronischen, nur in einer Richtung stromdurchlässigen Energieschalters X1 und eines Kondensators C.

In der weiteren Beschreibung, wenn von Schaltern X1 bis X4 die Rede ist, handelt es sich um elektronische, nur in einer Richtung stromdurchlässige, aus wenigstens einem Halbleiterelement bestehende Schalter, vorzugsweise Thyristorschalter, die von der Steuerschaltung ST angesteuert werden.

Parallel zum Kondensator C liegt eine Reihenschaltung aus einer mit dem Energieschalter X1 verbundenen Umschwingspule L und einem Ladestopschalter X3, dessen Funktion später erklärt wird.

Parallel zum Ladestopschalter X3 ist eine Reihenschaltung aus einer Parallelschaltung eines in Richtung von der Umschwingspule L weg stromdurchlässigen Ladeschalters X2 und eines in Richtung zur Umschwingspule hin stromdurchlässigen Entladeschalters X4 und aus einer Parallelschaltung des Stellgliedes P mit einer Diode D, die in Richtung zum Ladeschalter X2 hin stromdurchlässig ist, angeordnet.

Die Schalter X1 bis X4 werden von einer mikroprozessorgesteuerten steuerschaltung ST abhängig von einem externen Steuersignal st, von der Kondensatorspannung Uc und von der Stellgliedspannung Up gesteuert.

In der üblicherweise mikroprozessorgesteuerten Steuerschaltung ST ist ein Kennfeld KF gemäß Figur 1 mit Bereichen Q der Größe Δt, ΔU enthalten, in welchen, wie beschrieben, jeweils die Inhalte "+1", "-1", oder "0" gespeichert sind.

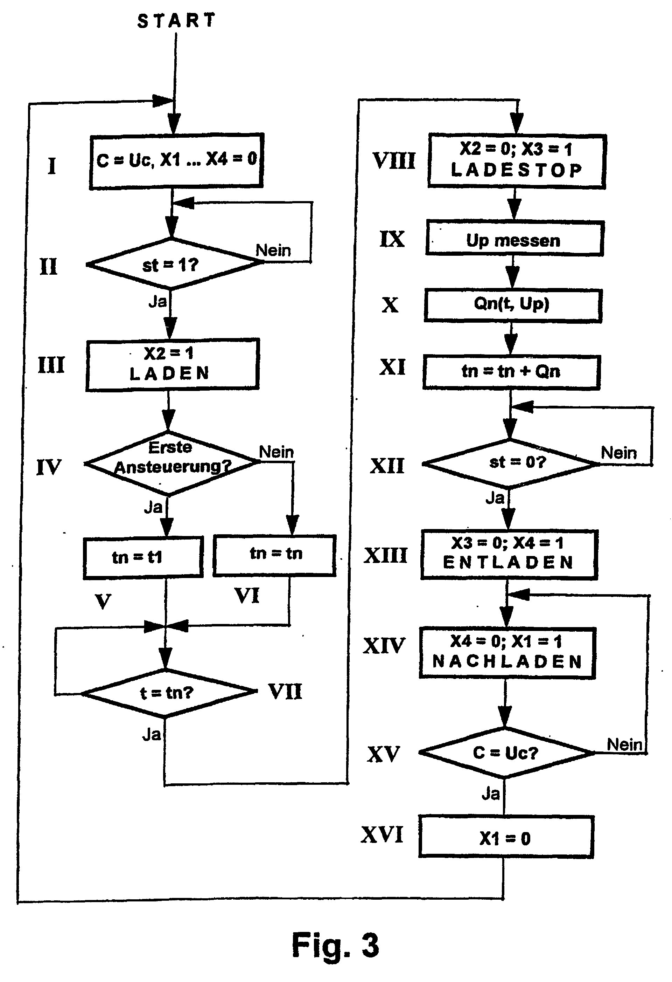

Das Verfahren zum Betreiben der Schaltung nach Figur 2 wird anhand eines in Figur 3 dargestellten Flußdiagramms näher erläutert, ausgehend von einem Anfangszustand (Zustand I), in welchem der Kondensator C voll auf die vorgegebene Spannung Uc geladen ist, sämtliche Schalter X1 bis X4 nichtleitend sind und die Umschwingspule L stromlos ist.
Mit dem Beginn eines externen Steuersignals st = 1 (Zustand II) wird der Ladeschalter X2 gezündet (stromleitend gesteuert). Damit beginnt der Kondensator C, sich über die Umschwingspule L in das wie ein Kondensator wirkende Stellglied P zu entladen und dieses aufzuladen (Zustand III), was sich als Längenänderung des Piezostellgliedes auswirkt. Die am Stellglied anliegende Spannung steigt an.

Zugleich mit dem Ladebeginn erfolgt die Abfrage, ob es der erste Ladevorgang (nach Einschalten des Zündschalters) ist (Zustand IV). Ist dies der Fall, so wird die Ladezeit tn auf den vorgegebenen Wert t1 gesetzt (Zustand V).

Nach Ablauf der Ladezeit (Zustand VII), die, wie alle Zeitmessungen, mit dem internen Takt der Steuerschaltung ausgemessen wird, wird der Ladevorgang beendet, der Ladeschalter X2 wird nichtleitend, X2 = 0, und der Ladestopschalter X3 wird leitend (X3 = 1, Zustand VIII). Der Schwingkreis L-C schwingt weiter, bis die Umschwingspule L stromlos ist. Der Ladezustand des Stellgliedes P bleibt erhalten, solange das Steuersignal st anliegt.

Nach Beendigung der Aufladung des Stellgliedes P wird die ihm aufgeprägte Spannung Up gemessen (Zustand IX) und der diesem Wert Up und der Ladezeit tn zugeordnete Bereich Qn im Kennfeld KF bestimmt (Zustand X). Anschließend (Zustand XI) wird die Ladezeit tn um den Inhalt von Qn korrigiert. Gemäß dem in Figur 1 beschriebenen Beispiel eines ersten Ansteuervorgangs (Ladevorgangs) war tn = t1, die damit erzielte Stellgliedspannung Up war U1; dem entsprach der Kennfeldbereich Q1. Dessen Inhalt war "-1", das heißt "-1*Δt". Somit ergibt sich für den nächsten Ansteuervorgang: tn = t1 -Δt. Dieser Wert wird in einem dafür vorgesehenen Speicherfeld abgespeichert und beim nächsten Ansteuervorgang (Zustand VI, weil dies dann nicht mehr der erste Ansteuervorgang ist) als Ladezeit vorgegeben.

Anschließend (Zustand XII) wird abgewartet, bis das Steuersignal st verschwindet (st = 0). Wenn es verschwindet, muß das Stellglied entladen werden. Dazu wird der Ladestopschalter X3 nichtleitend gesteuert, X3 = 0, und der Entladeschalter leitend, X4 = 1 (Zustand XIII). Nun entlädt sich das Stellglied P über die Umschwingspule L in den Kondensator C. Ist das Stellglied bis auf die Schwellspannung der Diode D entladen, übernimmt diese den Strom; der Schwingkreis L-C schwingt weiter, bis die Umschwingspule stromlos ist. Schalter X4 wird nichtleitend.

Zum Nachladen des Kondensators C (Zustand XIV) wird der Energieschalter X1 solange leitend gesteuert, bis der Kondensator C auf die vorgegebene Spannung Uc aufgeladen ist (Zustand XV). Danach wird der Energieschalter X1 wieder nichtleitend gesteuert (Zustand XVI). Damit ist ein Ansteuervorgang des Stellgliedes P beendet und es kann ein neuer beginnen.
Statt der Vorgabe einer bestimmten Ladezeit tn und der Ermittlung der in dieser Zeit erreichten Stellgliedspannung Up ist es ebensogut möglich, unter Verwendung desselben Kennfeldes (Figur 1) eine bestimmte Stellgliedspannung vorzugeben bzw. zu regeln, und die dazu benötigte Ladezeit zu messen.

Bei Verwendung mehrerer Kraftstoffeinspritzventile in einer Brennkraftmaschine mit kapazitiven Stellgliedern kann eine in der älteren deutschen Patentanmeldung 19632872.1, Figur 3 oder 4 gezeigte Schaltungsanordnung verwendet werden.

In der Steuerschaltung kann für jedes Stellglied ein eigenes Kennfeld KF vorgesehen sein, es kann aber auch für alle Stellglieder oder für jede Stellgliedgruppe (Bank) ein umschaltbares Kennfeld vorgesehen sein.

## Patentansprüche

1. Verfahren zum Ansteuern eines kapazitiven Stellgliedes (P), insbesondere eines piezoelektrisch betriebenen Kraftstoffeinspritzventils einer Brennkraftmaschine, mit einem vorgegebenen Energiebetrag (e),
**dadurch gekennzeichnet,**
**daß** bei einem Ansteuervorgang des Stellgliedes (P) die Ladung eines auf eine vorgegebene Spannung (Uc) geladenen Kondensators (C) während einer vorgegebenen Ladezeit (t1, tn) wenigstens teilweise auf das Stellglied (P) übertragen wird, und
**daß** die Ladezeit (tn) des folgenden Ansteuervorgangs um einen in einem dieser Ladezeit (t1, tn) und der in dieser Ladezeit erreichten Ladespannung (Up) des Stellgliedes (P) zugeordneten Bereich (Q) eines Kennfeldes (KF) gespeicherten Betrag (+Δt,0,-Δt) verändert wird.

2. Verfahren zum Ansteuern eines kapazitiven Stellgliedes (P), insbesondere eines piezoelektrisch betriebenen Kraftstoffeinspritzventils einer Brennkraftmaschine, mit einem vorgegebenen Energiebetrag (e),
**dadurch gekennzeichnet,**
**daß** bei einem Ansteuervorgang des Stellgliedes (P) die Ladung eines auf eine vorgegebene Spannung (Uc) geladenen Kondensators (C) auf das Stellglied (P) übertragen wird, bis dieses auf eine vorgegebene Ladespannung (Up) aufgeladen ist, und
**daß** die Ladespannung (Up) des folgenden Ansteuervorgangs um einen in einem dieser Ladespannung (Up) und der dafür benötigten Ladezeit (tn) des Stellgliedes (P) zugeordneten Bereich (Q) eines Kennfeldes (KF) gespeicherten Betrag (+Δt, 0, -Δt) verändert wird.

3. Verfahren nach Anspruch 1, **dadurch gekennzeichnet, daß** die Bereiche (Q) in dem Kennfeld (KF), in denen ein bestimmter Betrag (Q = 0) gespeichert ist, eine experimentell ermittelte Kurve konstanter Energie (e) bestimmen, wobei dieser Energiebetrag (e) von dem auf die vorgegebene Spannung (Uc) geladenen Kondensator (C) abhängig von der jeweiligen, temperaturabhängigen Stellgliedkapazität während der dem jeweiligen Bereich zugeordneten Ladezeit (t) auf das Stellglied (P) übertragen wird, wenn das Stellglied (P) dabei auf die diesem Bereich (Q) zugeordnete Ladespannung (U2) aufgeladen wird.

4. Verfahren nach Anspruch 2, **dadurch gekennzeichnet, daß** die Bereiche (Q) in dem Kennfeld (KF), in denen ein bestimmter Betrag (Q = 0) gespeichert ist, eine experimentell ermittelte Kurve konstanter Energie (e) bestimmen, wobei dieser Energiebetrag (e) von dem auf die vorgegebene Spannung (Uc) geladenen Kondensator (C) abhängig von der jeweiligen, temperaturabhängigen Stellgliedkapazität übertragen wird, wenn das Stellglied (P) auf die einem Bereich (Q) zugeordnete Ladespannung (Up) in der diesem Bereich (Q) zugeordneten Ladezeit aufgeladen wird.

5. Vorrichtung zur Durchführung des Verfahrens nach Anspruch 1 oder 2, **dadurch gekennzeichnet,**
**daß** zwischen Pluspol (+V) und Minuspol (GND) einer Energiequelle ein Kondensator (C) angeordnet ist, der von der Energiequelle über einen nur in eine Richtung stromdurchlässigen Energieschalter (X1) aufladbar ist,
**daß** parallel zum Kondensator (C) eine Reihenschaltung aus einer mit dem Energieschalter (X1) verbundenen Umschwingspule (L) und einem Ladestopschalter (X3) angeordnet ist,
**daß** parallel zum Ladestopschalter (X3) eine Reihenschaltung aus einer Parallelschaltung eines zur Umschwingspule (L) hin stromdurchlässigen Entladeschalters (X4) und einer von der Umschwingspule (L) weg stromdurchlässigen Ladeschalters (X2) und aus einer einer Parallelschaltung des Stellgliedes (P) mit einer Diode (D), die in Richtung zum Minuspol (GND) hin stromdurchlässig ist, angeordnet ist, und
**daß** eine Steuerschaltung (ST) vorgesehen ist,
in welcher vorgegebene Werte für Kondensatorspannung (Uc) und Stellglied -ladezeiten (t1, tn) gespeichert sind, in welcher ein Kennfeld (KF) vorgesehen ist, in dessen Bereichen abhängig von der Ladezeit (tn) und der Ladespannung (Up) des Stellgliedes (P) Korrekturbeträge (Δt, ΔU) für die Ladezeit (tn) oder für die Ladespannung (Up) gespeichert sind, und
welcher ein externes Steuersignal (st), die Kondensatorspannung (Uc) und die Stellgliedspannung (Up) zugeführt werden, und welche die Schalter (X1 bis X4) steuert.

6. Vorrichtung zur Durchführung des Verfahrens nach Anspruch 5, **dadurch gekennzeichnet, daß** für jedes einzelne Stellglied (P), für jede Gruppe von Stellgliedern oder für alle Stellglieder gemeinsam ein Kennfeld (KF) vorgesehen ist.

## Claims

1. Method for controlling a capacitive actuator (P), in particular a piezoelectrically operated fuel injection valve of an internal combustion engine, with a predefined amount of energy (e), **characterised in that**
in the case of a control procedure of the actuator (P) the charge of a capacitor (C) charged to a predefined voltage (Uc) is transferred during a predefined charging time (t1, tn) at least in part to the actuator (P), and
that the charging time (tn) of the subsequent control procedure is altered by an amount (+Δt, 0, -Δt) stored in a range (Q) of a characteristics map (KF) assigned to this charging time (t1, tn) and to the charging voltage (Up) of the actuator (P) reached in this charging time.

2. Method for controlling a capacitive actuator (P), in particular a piezoelectrically operated fuel injection valve of an internal combustion engine, with a predefined amount of energy (e), **characterised in that**
in the case of a control procedure of the actuator (P) the charge of a capacitor (C) charged to a predefined voltage (Uc) is transferred to the actuator (P) until said actuator is charged to a predefined charging voltage (Up), and
that the charging voltage (Up) of the subsequent control procedure is altered by an amount (+Δt, 0, -Δt) stored in a range (Q) of a characteristics map (KF) assigned to this charging voltage (Up) and to the requisite charging time (tn) of the actuator (P).

3. Method according to Claim 1, **characterised in that** the ranges (Q) in the characteristics map (KF) in which a particular amount (Q = 0) is stored, determine an experimentally ascertained curve of constant energy (e), this amount of energy (e) being transferred to the actuator (P) from the capacitor (C) charged to the predefined voltage (Uc) as a function of the respective, temperature-dependent actuator capacity during the charge time (t) assigned to the respective range, if the actuator (P) is in this case charged to the charging voltage (U2) assigned to this range (Q).

4. Method according to Claim 2, **characterised in that** the ranges (Q) in the characteristics map (KF) in which a particular amount (Q = 0) is stored, determine an experimentally ascertained curve of constant energy (e), this amount of energy (e) being transferred from the capacitor (C) charged to the predefined voltage (Uc) as a function of the respective, temperature-dependent actuator capacity, if the actuator (P) is charged to the charging voltage (Up) assigned to a range (Q) in the charging time assigned to this range (Q).

5. Device for implementing the method according to Claim 1 or 2, **characterised in that**
a capacitor is arranged between the positive pole (+V) and negative pole (GND) of an energy source, it being possible to charge said capacitor from the energy source via an energy switch (X1) permeable to current only in one direction,
a series circuit comprising a ring-around coil (L), connected to the energy switch (X1), and a charging stop switch (X3) is arranged parallel to the capacitor (C),
a series circuit, comprising a parallel circuit of a discharge switch (X4) permeable to current in the direction of the ring-around coil (L) and of a charging switch (X2) permeable to current in the direction away from the ring-around coil (L), and of a parallel circuit of the actuator (P) with a diode (D) which is permeable to current in the direction of the negative pole (GND), is arranged parallel to the charging stop switch (X3), and
that a control circuit (ST) is provided,
in which predefined values for capacitor voltage (Uc) and actuator charging times (t1, tn) are stored, in which a characteristics map (KF) is provided, in the ranges of which correction amounts (Δt, ΔU) for the charging time (tn) or for the charging voltage (Up) are stored, as a function of the charging time (tn) and of the charging voltage (Up) of the actuator (P), and
to which an external control signal (st), the capacitor voltage (Uc) and the actuator voltage (Up) are fed, and which controls the switches (X1 to X4).

6. Device for implementing the method according to Claim 5, **characterised in that** a characteristics map (KF) is provided for each individual actuator (P), for each group of actuators or for all actuators in common.

## Revendications

1. Procédé pour commander un élément de réglage capacitif (P), plus particulièrement une vanne d'injection de carburant à commande piézoélectrique d'un moteur à combustion interne, avec une quantité d'énergie prédéfinie (e),
**caractérisé en ce**
**que** lors d'un processus de commande de l'élément de réglage (P), la charge d'un condensateur (C) chargé à une tension prédéfinie (Uc) est transmise au moins partiellement à l'élément de réglage (P) pendant un temps de charge prédéfini (t1, tn), et
**que** le temps de charge (tn) du processus de charge suivant est modifié d'une valeur (+^{Δ}t, 0, -^{Δ}t) mémorisée dans une zone (Q) d'un diagramme caractéristique (KF) associée à ce temps de charge (t1, tn) et à une tension de charge (Up) de l'élément de réglage (P) atteinte dans ce temps de charge (t1, tn).

2. Procédé pour commander un élément de réglage capacitif (P), plus particulièrement une vanne d'injection de carburant à commande piézoélectrique d'un moteur à combustion interne, avec une quantité d'énergie prédéfinie (e),
**caractérisé en ce**
**que** lors d'un processus de commande de l'élément de réglage (P), la charge d'un condensateur (C) chargé à une tension prédéfinie est transmise à l'élément de réglage (P) jusqu'à ce que celui-ci soit chargé à une tension de charge prédéfinie (Up), et
**que** la tension de charge (Up) du processus de charge suivant est modifiée d'une valeur (+^{Δ}t, 0, -^{Δ}t) mémorisée dans une zone (Q) d'un diagramme caractéristique (KF) associée à cette tension de charge (Up) et au temps de charge (tn) de l'élément de réglage (P) nécessaire à cet effet.

3. Procédé selon la revendication 1, **caractérisé en ce que** les zones (Q) du diagramme caractéristique (KF) dans lesquelles est mémorisée une valeur donnée (Q = 0) définissent une courbe d'énergie constante (e) déterminée de manière expérimentale, cette quantité d'énergie (e) étant transmise du condensateur (C) chargé à la tension prédéfinie (Uc) en fonction de la capacité correspondante de l'élément de réglage, laquelle dépend de la température, vers l'élément de réglage (P) pendant le temps de charge (t) associé à la zone correspondante lorsque l'élément de réglage (P) est chargé à la tension de charge (U2) associée à cette zone (Q).

4. Procédé selon la revendication 2, **caractérisé en ce que** les zones (Q) du diagramme caractéristique (KF) dans lesquelles est mémorisée une valeur donnée (Q = 0) définissent une courbe d'énergie constante (e) déterminée de manière expérimentale, cette quantité d'énergie (e) étant transmise du condensateur (C) chargé à la tension prédéfinie (Uc) en fonction de la capacité correspondante de l'élément de réglage, laquelle dépend de la température, lorsque l'élément de réglage (P) est chargé pendant un temps de charge associé à cette zone (Q) à la tension de charge (Up) associée à cette zone (Q).

5. Dispositif pour mettre en oeuvre le procédé selon la revendication 1 ou 2, **caractérisé en ce**
**qu'**entre le pôle positif (+V) et le pôle négatif (GND) d'une source d'énergie est disposé un condensateur (C) qui peut être chargé par la source d'énergie par le biais d'un commutateur d'énergie (X1) qui n'est conducteur que dans un sens,
**qu'**en parallèle avec le condensateur (C) est disposé un circuit série composé d'une bobine oscillatrice (L) reliée au commutateur d'énergie (X1) et d'un commutateur d'arrêt de charge (X3),
**qu'**en parallèle avec le commutateur d'arrêt de charge (X3) est disposé un circuit série composé d'un circuit parallèle composé d'un commutateur de décharge (X4) qui n'est conducteur que dans un sens en direction de la bobine oscillatrice (L) et d'un commutateur de charge (X2) qui n'est conducteur que dans un sens dans une direction à l'opposé de la bobine oscillatrice (L) et d'un circuit parallèle composé de l'élément de réglage (P) avec une diode (D) qui est conductrice en direction du pôle négatif (GND), et
**qu'**il est prévu un circuit de commande (ST)
dans lequel sont mémorisées des valeurs prédéfinies de la tension du condensateur (Uc) et des temps de charge de l'élément de réglage (t1, tn), dans lequel est prévu un diagramme caractéristique (KF) dans les zones duquel sont mémorisées des valeurs de correction (^{Δ}t, ΔU) du temps de charge (tn) ou de la tension de charge (Up) en fonction du temps de charge (tn) et de la tension de charge (Up) de l'élément de réglage (P), et
auquel sont acheminés un signal de commande externe (st), la tension du condensateur (Uc) et la tension de l'élément de réglage (Up) et qui commande les commutateurs (X1 à X4).

6. Dispositif pour mettre en oeuvre le procédé selon la revendication 5, **caractérisé en ce qu'**un diagramme caractéristique (KF) est prévu pour chaque élément de réglage (P) individuel, pour chaque groupe d'éléments de réglage ou pour tous les éléments de réglage en commun.
